(19) Europäisches Patentamt / European Patent Office / Office européen des brevets

(11) **EP 2 755 390 A1**

(12) **EUROPEAN PATENT APPLICATION**
published in accordance with Art. 153(4) EPC

(43) Date of publication:
**16.07.2014 Bulletin 2014/29**

(51) Int Cl.:
*H04N 13/04* (2006.01)     *G09G 5/00* (2006.01)
*G09G 5/36* (2006.01)     *G09G 5/38* (2006.01)

(21) Application number: **12829273.7**

(22) Date of filing: **24.08.2012**

(86) International application number:
**PCT/JP2012/071437**

(87) International publication number:
**WO 2013/035551 (14.03.2013 Gazette 2013/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.09.2011   JP 2011195073**

(71) Applicants:
• **Sharp Kabushiki Kaisha**
  **Osaka-shi, Osaka 545-8522 (JP)**
• **Kochi University Of Technology**
  **Kami-City, Kochi 782-8502 (JP)**

(72) Inventors:
• **KUMAI, Hisao**
  **Osaka-shi, Osaka 545-8522 (JP)**
• **TSUBAKI, Ikuko**
  **Osaka-shi, Osaka 545-8522 (JP)**
• **SETO, Mikio**
  **Osaka-shi, Osaka 545-8522 (JP)**
• **SHIGEMASU, Hiroaki**
  **Kami-city, Kochi 782-8502 (JP)**

(74) Representative: **Müller - Hoffmann & Partner Patentanwälte**
  **St.-Martin-Strasse 58**
  **81541 München (DE)**

(54) **STEREOSCOPIC IMAGE PROCESSING APPARATUS, STEREOSCOPIC IMAGE PROCESSING METHOD, AND PROGRAM**

(57)     A stereo-image processing apparatus capable of adaptively converting, regarding stereo vision, a parallax distribution of a stereo image in accordance with human visual performance is provided. The stereo-image processing apparatus includes a continuity detection unit (31) that detects a parallax continuous region on the basis of the discontinuity of parallax values in a stereo image and a conversion processing unit (32) that performs processing for enhancing the parallax gradient of the parallax continuous region.

FIG. 1

EP 2 755 390 A1

**Description**

Technical Field

The present invention relates to a stereo-image processing apparatus, a stereo-image processing method, and a program associated with processing of a stereo image.

Background Art

In a technology that has been recently used to display stereo images on an image display apparatus, stereoscopic display is realized by presenting different videos to a person's left and right eyes. A person perceives a sense of depth by parallax, which is a shift of an object between left-eye and right-eye images. As a problem in stereoscopic display, an example may be given in which when the amount of parallax is large and exceeds the tolerance limits of human visual performance, it makes it difficult for users to perceive stereo vision and causes users to feel strain and uncomfortable.

PTL 1 discloses a method for performing control such that a parallax distribution of an input image falls within a predetermined range by performing shifting processing in which relative positions of left-eye and right-eye images are shifted in a horizontal direction and by performing scaling processing in which enlargement or reduction is performed using, as a datum, the center of the left-eye and right-eye images on which such image conversion has been performed.

In addition, PTL 2 discloses a method for controlling parallax to increase the sense of depth, by performing shift control on left-eye and right-eye images such that the left-eye and right-eye images are shifted in a projection direction (toward the front) in the case where although the range of parallax presented by a stereo image falls within the tolerance limits of human visual performance, the range of parallax is close to a display screen and the sense of depth is not very pronounced.

Citation List

Patent Literature

PTL 1: Japanese Unexamined Patent Application Publication No. 2011-55022
PTL 2: Japanese Patent No. 3157384

Non Patent Literature

NPL 1: Mitsuhiro YOSHIDA, Hiroaki Shigemasu, "Spatial and Temporal Range of Binocular Local Contrast Effect", IEICE Technical Report, HIP2010-60 (2010-11), pp. 1 to 6, 2010

Summary of Invention

Technical Problem

In the technology described in PTL 1, however, in the case where the range of parallax of a stereo image obtained before parallax adjustment is significantly greater than the tolerance limits of human visual performance, the range of parallax is controlled and significantly reduced. As a result, the depth expressed by the stereo image is also significantly compressed and the sense of depth may be lowered.

In addition, in the technology described in PTL 2, it is possible to enhance the sense of depth by performing control such that the range of parallax of a stereo image is shifted toward the front; however, although a feeling that the subject is projecting is obtained, the depth of the subject is not enhanced. Furthermore, the parallax represented by the stereo image is increased by performing shifting toward the front. When the parallax is increased, a factor that makes stereo images harder to see may also be more pronounced.

In contrast, in stereo vision, it is known that the difference of depth between objects tends to be perceived in an enhanced manner (see NPL 1). Regarding such stereo vision, human visual performance has not been taken into account at all in parallax adjustment technologies in the past.

The present invention has been made in terms of the above-described circumstances and an object of the present invention is to provide a stereo-image processing apparatus, a stereo-image processing method, and a program capable of adaptively converting, regarding stereo vision, a parallax distribution of a stereo image in accordance with human visual performance. Solution to Problem

In order to solve the above-described problem, first technical means of the present invention is a stereo-image processing apparatus that performs conversion on a parallax distribution of a stereo image and is characterized by including a continuity detection unit that detects, for the stereo image, a parallax continuous region on the basis of parallax discontinuity, and a conversion processing unit that performs processing for enhancing a parallax gradient of the parallax continuous region.

Second technical means is characterized in that, in the first technical means, the continuity detection unit treats a parallax component of the stereo image as a parallax map and detects the parallax continuous region by performing processing in which the parallax component is separated into a continuous parallax component and a parallax component other than the continuous parallax component.

Third technical means is characterized in that, in the second technical means, the conversion processing unit performs enlargement processing in which the parallax gradient is enhanced by enlarging the continuous parallax component and reduction processing in which the parallax component other than the continuous parallax component is reduced, performs addition processing in which the continuous parallax component on which the enlargement processing has been performed and the parallax component other than the continuous parallax component on which the reduction processing has been performed are added together, and outputs a result of the addition as a parallax map obtained after conversion processing.

Fourth technical means is characterized in that, in the second technical means, the conversion processing unit performs enlargement processing in which the parallax gradient is enhanced by enlarging the continuous parallax component, performs addition processing in which the continuous parallax component on which the enlargement processing has been performed and the parallax component other than the continuous parallax component are added together, and outputs a result of the addition as a parallax map obtained after conversion processing.

Fifth technical means is characterized in that, in the second technical means, the conversion processing unit performs reduction processing in which the parallax gradient of the continuous parallax component is relatively enhanced by reducing the parallax component other than the continuous parallax component, performs addition processing in which the continuous parallax component and the parallax component other than the continuous parallax component on which the reduction processing has been performed are added together, and outputs a result of the addition as a parallax map obtained after conversion processing.

Sixth technical means is characterized in that, in the third or fourth technical means, the enlargement processing is processing for multiplying the continuous parallax component by a first constant greater than 1.

Seventh technical means is characterized in that, in the third or fifth technical means, the reduction processing is processing in which the parallax component other than the continuous parallax component is multiplied by a second constant greater than or equal to 0 and smaller than 1, and a third constant is added.

Eighth technical means is characterized in that, in the first technical means, the continuity detection unit detects the parallax continuous region by performing processing in which a parallax component of the stereo image is treated as a parallax map, a histogram of parallax values is generated from the parallax map, regions of parallax values having frequencies greater than a predetermined threshold on the histogram are detected as parallax continuous regions from the histogram, and a region of parallax values having frequencies smaller than or equal to the predetermined threshold on the histogram is detected as a parallax discontinuous region.

Ninth technical means is characterized in that, in the eighth technical means, the conversion processing unit performs shifting processing for performing shifting such that the parallax discontinuous region on the histogram is reduced or removed and a gap between the parallax continuous regions, which are adjacent to each other, is reduced or eliminated, and furthermore histogram enlargement processing in which the parallax gradient is enhanced by enlarging parallax values on a histogram obtained after shifting processing.

Tenth technical means is characterized in that, in the eighth technical means, the conversion processing unit performs histogram enlargement processing in which the parallax gradient is enhanced by enlarging parallax values on the histogram.

Eleventh technical means is characterized in that, in the eighth technical means, the conversion processing unit performs shifting processing for performing shifting such that the parallax discontinuous region on the histogram is reduced or removed and a gap between the parallax continuous regions, which are adjacent to each other, is reduced or eliminated.

Twelfth technical means is characterized in that, in the ninth or tenth technical means, the histogram enlargement processing is processing in which parallax values on the histogram are multiplied by a fourth constant greater than 1, and a fifth constant is added.

Thirteenth technical means is characterized in that, in the twelfth technical means, the histogram enlargement processing is processing performed by making the fourth constant and the fifth constant be different on a parallax-continuous-region-by-parallax-continuous-region basis in the histogram.

Fourteenth technical means is characterize in that, in any one of the ninth to thirteenth technical means, the conversion processing unit generates a parallax map conversion table for converting the parallax map from histograms obtained before and after performing of the shifting processing and the histogram enlargement processing, converts the parallax map in accordance with the parallax map conversion table, and performs output.

Fifteenth technical means is a stereo-image processing method for converting a parallax distribution of a stereo image and is characterized by including a step of detecting, for the stereo image, a parallax continuous region on the basis of parallax discontinuity, and a step of performing processing for enhancing a parallax gradient of the parallax continuous region.

Sixteenth technical means is a program causing a computer to execute parallax distribution conversion processing for converting a parallax distribution of a stereo image and the parallax distribution conversion processing is characterized by including a step of detecting, for the stereo image, a parallax continuous region on the basis of parallax discontinuity, and a step of performing processing for enhancing a parallax gradient of the parallax continuous region.

Advantageous Effects of Invention

According to an embodiment of the present invention, it is possible to adaptively convert, regarding stereo vision, a parallax distribution of a stereo image in accordance with human visual performance and it is also possible to retain the sense of depth of the stereo image such that the stereo image is prevented from being doubled due to too large parallax, the entire amount of parallax is compressed, and the sense of depth is prevented from being lowered. As a result, a preferable sense of depth may be provided to viewers. Brief Description of Drawings

[Fig. 1] Fig. 1 is a block diagram illustrating an example of the structure of a stereo-image display apparatus that includes a stereo-image processing apparatus according to a first embodiment of the present invention.

[Fig. 2A] Fig. 2A is a diagram illustrating an example of a parallax map received by the stereo-image display apparatus of Fig. 1.

[Fig. 2B] Fig. 2B is a diagram obtained by making a graph of parallax values of a row corresponding to the dotted line in the parallax map of Fig. 2A, where the vertical axis represent parallax value and the horizontal axis represents coordinates in a horizontal direction.

[Fig. 3] Fig. 3 is a block diagram illustrating an example of a specific structure of a parallax distribution conversion unit in the stereo-image display apparatus of Fig. 1.

[Fig. 4A] Fig. 4A is a diagram illustrating an example of a parallax map on a row-by-row basis after a parallax structure extraction unit in the parallax distribution conversion unit of Fig. 3 has performed parallax structure extraction on the parallax map of Fig. 2B.

[Fig. 4B] Fig. 4B is a diagram illustrating an example of a parallax map on a row-by-row basis after a parallax reduction unit in the parallax distribution conversion unit of Fig. 3 has performed parallax reduction on the parallax map of Fig. 4A.

[Fig. 4C] Fig. 4C is a diagram illustrating an example of a parallax map on a row-by-row basis after a continuous-parallax-component extraction unit in the parallax distribution conversion unit of Fig. 3 has extracted a continuous parallax component in accordance with the parallax map of Fig. 2B and the parallax map of Fig. 4A.

[Fig. 4D] Fig. 4D is a diagram illustrating an example of a parallax map on a row-by-row basis after a parallax enhancing unit in the parallax distribution conversion unit of Fig. 3 has performed parallax enhancement on the parallax map of Fig. 4C.

[Fig. 4E] Fig. 4E is a diagram illustrating an example of a parallax map on a row-by-row basis after a parallax combining unit in the parallax distribution conversion unit of Fig. 3 has performed parallax combination on the parallax map of Fig. 4B and the parallax map of Fig. 4D.

[Fig. 5] Fig. 5 is a flowchart for describing an example of processing performed by an image generation unit in the stereo-image display apparatus of Fig. 1.

[Fig. 6] Fig. 6 is a block diagram illustrating an example of another specific structure of the parallax distribution conversion unit in the stereo-image display apparatus of Fig. 1 and is a block diagram illustrating an example of a specific structure of a parallax distribution conversion unit in a stereo-image processing apparatus according to a second embodiment of the present invention.

[Fig. 7A] Fig. 7A is a diagram illustrating an example of another parallax map of a stereo image input to the stereo-image display apparatus of Fig. 1 and is a diagram illustrating an example of a parallax map input to the stereo-image processing apparatus according to the second embodiment.

[Fig. 7B] Fig. 7B is a diagram illustrating a parallax histogram of the parallax map of Fig. 7A.

[Fig. 8A] Fig. 8A is a diagram illustrating an example of a result obtained by performing region division in accordance with values of the parallax histogram of Fig. 7B.

[Fig. 8B] Fig. 8B is a diagram illustrating an example of a result obtained by compressing a parallax histogram in accordance with the result of the region division in Fig. 8A.

[Fig. 8C] Fig. 8C is a diagram illustrating an example of a result obtained by enhancing a parallax histogram in accordance with the result of compression of the parallax histogram in Fig. 8B.

Description of Embodiments

A stereo-image processing apparatus according to the present invention is an apparatus that may realize parallax adjustment such that, for an input stereo image, the gradients of parallax values in subjects (regions having continuous parallax values) are enhanced and a parallax distribution (that is, the depth of each of the subjects) of the stereo image is converted such that the differences between parallax values at a boundary (a region where parallax values change discontinuously) between the subjects are preferably reduced.

In the following, various embodiments of the present invention will be described in detail with reference to the attached drawings.

First Embodiment

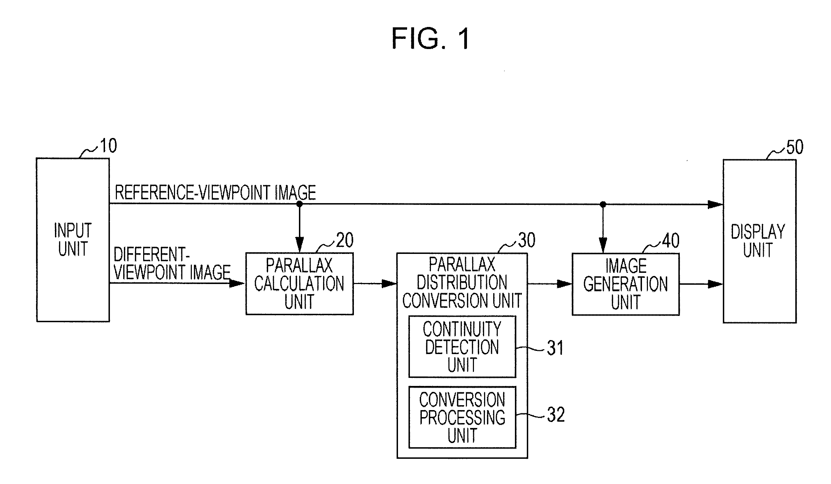

Fig. 1 is a block diagram illustrating an example of the structure of a stereo-image display apparatus that includes a stereo-image processing apparatus according to a first embodiment of the present invention.

As illustrated in Fig. 1, the stereo-image display apparatus according to this embodiment includes an input unit 10 that receives a stereo image including a plurality of viewpoint images, a parallax calculation unit 20 that calculates a parallax map from a reference-viewpoint image and a different-viewpoint image, a parallax distribution conversion unit 30 that changes (converts) a parallax distribution of the stereo image by changing the parallax map acquired by the parallax calculation unit 20, an image generation unit 40 that reconstructs a different-viewpoint image from the reference-viewpoint image and a parallax distribution obtained after conversion performed by the parallax distribution conversion unit 30, and a display unit 50 that performs binocular stereoscopic image display using the reference-viewpoint image and the different-viewpoint image generated by the image generation unit 40.

Stereo-image processing apparatuses according to the present invention, including this embodiment, include at least the parallax distribution conversion unit 30 among the units 10, 20, 30, 40, and 50 and a parallax distribution of a stereo image may be converted. Note that the parallax distribution conversion unit 30 according to the present invention does not have to convert a parallax distribution by converting a parallax map but may execute conversion of a parallax distribution in another method.

In the following, each unit of the stereo-image display apparatus according to this embodiment will be described in detail.

The input unit 10 receives data of a stereo image (stereo image data), and outputs a reference-viewpoint image and a different-viewpoint image from the received stereo image data. Here, the received stereo image data may be any data acquired by shooting with a camera, acquired through air waves, electrically read from a local storage device or a portable recording medium, acquired from an external server or the like by communication, or the like.

In addition, the stereo image data may be constituted by right-eye image data and left-eye image data, that is, two viewpoint images. Alternatively, the stereo image data may also be constituted by multiple-viewpoint image data for multi-view display including viewpoint images taken from three or more viewpoints. In the case where the stereo image data is constituted by right-eye image data and left-eye image data, the right-eye image data and the left-eye image data are used as the reference-viewpoint image and the different-viewpoint image. In the case of multiple-viewpoint image data, data of two viewpoints is selected from the multiple-viewpoint image data.

In addition, in the description for Fig. 1 and the following description, it is basically assumed that stereo image data is constituted by data of a plurality of viewpoint images; however, stereo image data may also be constituted by image data and depth data or parallax data. In this case, although the depth data or the parallax data is output as a different-viewpoint image from the input unit 10, image data may be used as a reference-viewpoint image and the depth data or the parallax data may be used as a parallax map. In the case where such a structure is used, the parallax calculation unit 20 becomes unnecessary in the stereo-image display apparatus illustrated in Fig. 1. The parallax distribution conversion unit 30 may change (convert) a parallax distribution of a stereo image by changing the parallax map input by the input unit 10. Note that, in the case where the format of the parallax map is not a format processable by the image generation unit 40, the parallax calculation unit 20 is provided and the parallax calculation unit 20 may perform conversion into such a format. In the following, for the case where depth data or parallax data is used, description will be complementarily and briefly given.

In the parallax calculation unit 20, parallax maps based on the reference-viewpoint image and the other viewpoint images are calculated, that is, for each of different-viewpoint images, a parallax map for the different-viewpoint image with respect to the reference-viewpoint image is calculated in this example. Each parallax map is a map representing differences in coordinate values in a lateral direction (in a horizontal direction) between the pixels of a corresponding different-viewpoint image and points of the reference-viewpoint image corresponding to the pixels.

As examples of parallax map calculation methods, various methods using block matching, dynamic programming, graph cuts, or the like are known. Any of them may be used; however, preferably, a method with robustness against shifts in a longitudinal direction and differences in brightness or color is used to calculate a parallax map. Note that although description is given of only parallax in a lateral direction, calculation of a parallax map and conversion of a parallax distribution in a longitudinal direction may also be similarly performed in the case where parallax in the longitudinal direction also exists.

The parallax distribution conversion unit 30 includes a continuity detection unit 31 and a conversion processing unit 32. The continuity detection unit 31 detects, on the basis of parallax discontinuity, a parallax continuous region of a stereo image. Here, the parallax discontinuity refers to a case where, in a stereo image, the difference between parallax values of adjacent pixels is greater than a predetermined value (a large and discontinuous change in the parallax value exists between the adjacent pixels at a boundary of subjects or the like). In addition, the parallax continuous region refers to a region where, in the stereo image, the differences between parallax values of adjacent pixels are smaller than or equal to a predetermined value, that is, a region of the stereo image where parallax values are continuous values. A pixel region having identical parallax values also belongs to the above-described parallax continuous region.

In other words, the continuity detection unit 31 detects whether or not a certain region is a pixel region where parallax values are continuous such that the differences between parallax values are smaller than or equal to the predetermined value. Furthermore, in other words, the continuity detection unit 31 detects whether the pixel region is a non-edge region having no parallax-value edges or an edge region having parallax-value edges.

Note that in the case where a stereo image is constituted by a plurality of viewpoint images, for each pair of viewpoint images among the plurality of viewpoint images, a parallax continuous region may be detected on the basis of parallax discontinuity. In the case where a stereo image is constituted by one reference-viewpoint image and parallax data or depth data, in the parallax data or the depth data, a parallax continuous region may be detected on the basis of parallax discontinuity in accordance with whether or not the difference between pieces of data corresponding to adjacent pixels is smaller than or equal to a predetermined value.

The conversion processing unit 32 performs parallax distribution conversion by performing parallax value conversion processing on parallax values of a parallax continuous region detected by the continuity detection unit 31 and parallax values of a region other than the parallax continuous region, the processing for the parallax continuous region being different from that for the region other than the parallax continuous region. This parallax value conversion processing may be processing for converting a parallax distribution, and corresponds to processing for converting a parallax map in this example. In this manner, the conversion processing unit 32 is capable of performing parallax adjustment through an operation unit, with which the stereo-image display apparatus is provided, such that parallax distribution conversion may be executed that is adaptive in accordance with a difference as to whether parallax values of a parallax distribution of a stereo image belong to a parallax continuous region or to a region other than the parallax continuous region (in accordance with, regarding stereo vision, human visual performance as described in Non Patent Literature 1). A preferable sense of depth may be provided to viewers by actually performing such parallax adjustment.

The conversion processing unit 32 performs processing for enhancing the parallax gradient of the parallax continuous region. In addition, the conversion processing unit 32 preferably performs, as the above-described parallax value conversion processing, (i) reduction processing on parallax values belonging to the region other than the parallax continuous region such that the differences between parallax values of adjacent pixels are reduced and (ii) enhancement processing on parallax values belonging to the parallax continuous region such that the differences between parallax values of adjacent pixels are enhanced. The above-described (ii) processing is an example of processing for enhancing the parallax gradient of a parallax continuous region. In a calculated parallax map, the differences between parallax values at a boundary between subjects of the stereo image (a relative distance between regions where parallax is continuous) are reduced by performing the above-described (i) processing, and the gradients of parallax values within the subjects (regions having continuous parallax values) are enhanced by performing the above-described (ii) processing. That is, the conversion processing unit 32 performs parallax distribution conversion such that, in the calculated parallax map, the differences between parallax values at the boundary between the subjects in the stereo image are reduced and the gradients of parallax values within the subjects are enhanced.

Note that the conversion processing unit 32 may perform not only the above-described parallax value conversion processing but also certain processing on parallax values belonging to the parallax continuous region and parallax values belonging to the region other than the parallax continuous region such that processing for the parallax values belonging to the parallax continuous region is different from that for the region other than the parallax continuous region. For example, only the above-described (i) processing is performed and the parallax values belonging to the parallax continuous region may be left as they are, or only the above-described (ii) processing is performed and the parallax values belonging to the region other than the parallax continuous region may be left as they are. In addition, for example, reduction processing may be performed on the parallax values belonging to the region other than the parallax continuous region such that significant reduction is performed for the parallax values, and reduction processing may be performed on the parallax values belonging to the parallax continuous region such that slight reduction is performed for the parallax values. Alternatively, enhancement processing may be performed on the parallax values belonging to the region other than the parallax continuous region such that slight enhancement is performed for the parallax values, and enhancement processing may be performed on the parallax values belonging to the parallax continuous region such that significant enhancement is performed for the parallax values.

Note that in the case where a stereo image is constituted by two viewpoint images, the continuity detection unit 31 detects a parallax continuous region on the basis of parallax discontinuity between the two viewpoint images, and the conversion processing unit 32 converts a parallax distribution based on the two viewpoint images. In the case where a stereo image is constituted by three or more viewpoint images, such detection and conversion processing may be performed for a predetermined viewpoint image (the reference-viewpoint image) and each of the other viewpoint images.

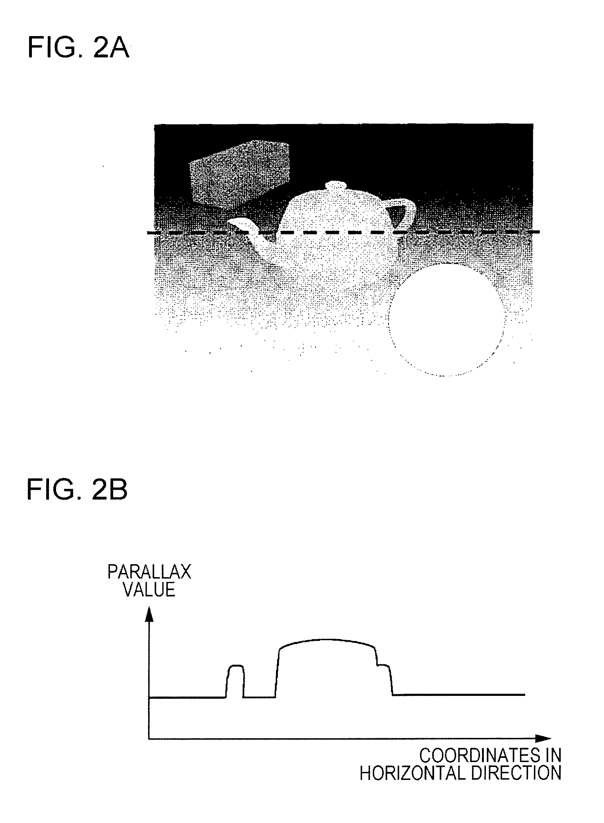

Next, an example of parallax distribution conversion processing according to this embodiment will be described by giving a specific example of a parallax map. Fig. 2A illustrates an example of a calculated parallax map, and Fig. 2B illustrates a graph of parallax of a certain row (a dotted line portion of Fig. 2A) of the parallax map of Fig. 2A. The parallax map of Fig. 2A is a parallax map to which, for each pixel, the parallax value calculated at the pixel is assigned as a certain luminance value. A spatial distribution of stereo-image parallax values is expressed such that the larger the parallax becomes in a projection direction, the greater the luminance value that is assigned is and the smaller the parallax becomes in a depth direction, the smaller the luminance value that is assigned is. Fig. 2B is a graph of parallax values of the row drawn with a dotted line in the parallax map of Fig. 2A, the vertical axis representing parallax values (the larger the parallax becomes in the projection direction, the greater the parallax value and the smaller the parallax becomes in the depth direction, the smaller the parallax value), the horizontal axis representing coordinates in a horizontal direction. In addition, in Fig. 2B, for convenience sake, the horizontal axis (a coordinate axis in the horizontal direction) is drawn at the minimum value of parallax values. Suppose that parallax values are negative values in the depth direction and positive values in the projection direction. In this example, parallax distribution conversion is performed on the basis of the parallax values on a row-by-row basis expressed in the graph of Fig. 2B.

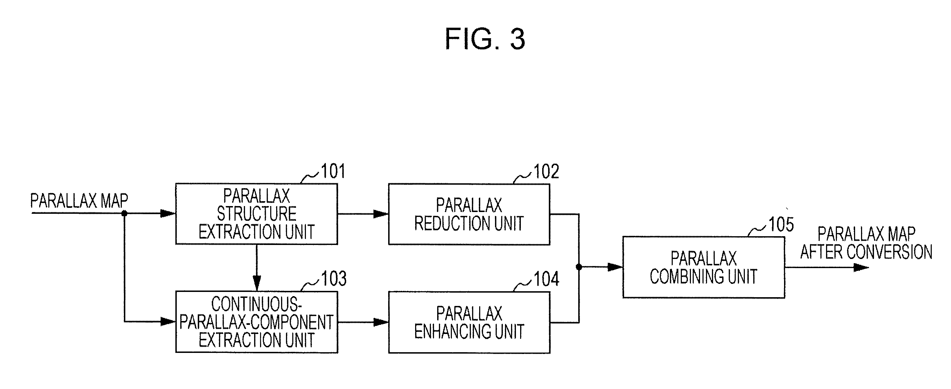

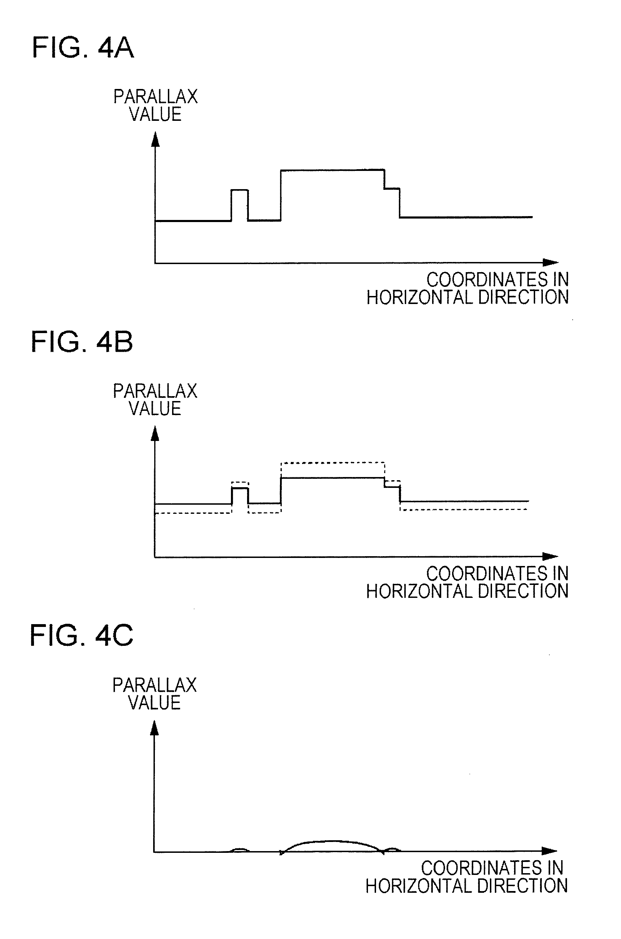

Here, for such a parallax map of Fig. 2B, as the above-described parallax value conversion processing, an example in which (i) reduction processing is performed on a parallax component other than a continuous parallax component and (ii) enhancement processing is performed on the continuous parallax component will be described with reference to Fig. 3 and Figs.4A to 4E. In this example, the parallax component of a stereo image is treated as a parallax map. The continuity detection unit 31 detects a parallax continuous region by performing processing in which the parallax component is separated into the continuous parallax component and the other parallax component. An example in which the conversion processing unit 32 performs enhancement processing on the continuous parallax component corresponding to a parallax continuous region will be described. Here, a procedure of parallax distribution conversion based on parallax values of a certain row in the parallax map will be described; however, parallax distribution conversion may be performed on the entire stereo image by performing similar conversion on the other rows.

Fig. 3 is a block diagram illustrating an example of a specific structure of the parallax distribution conversion unit 30 according to this embodiment. As illustrated in Fig. 3, the parallax distribution conversion unit 30 according to this embodiment includes a parallax structure extraction unit 101, a parallax reduction unit 102, a continuous-parallax-component extraction unit 103, a parallax enhancing unit 104, and a parallax combining unit 105. The parallax structure extraction unit 101 extracts a parallax structure from a parallax map of each row. The parallax reduction unit 102 performs reduction processing on the parallax map obtained after parallax structure extraction, extraction being performed by the parallax structure extraction unit 101. The continuous-parallax-component extraction unit 103 extracts a continuous parallax component by obtaining the differences between the parallax map of each row and the parallax map obtained after parallax structure extraction. The parallax enhancing unit 104 enhances the differences between parallax values of a continuous parallax component of the parallax map extracted by the continuous-parallax-component extraction unit 103. The parallax combining unit 105 combines the parallax maps of each row converted by the parallax reduction unit 102 and the parallax enhancing unit 104, and outputs a parallax map obtained after conversion. Here, the parallax structure extraction unit 101 and the continuous-parallax-component extraction unit 103 correspond to an example of the above-described continuity detection unit 31, and the parallax reduction unit 102, the parallax enhancing unit 104, and the parallax combining unit 105 correspond to the above-described conversion processing unit 32.

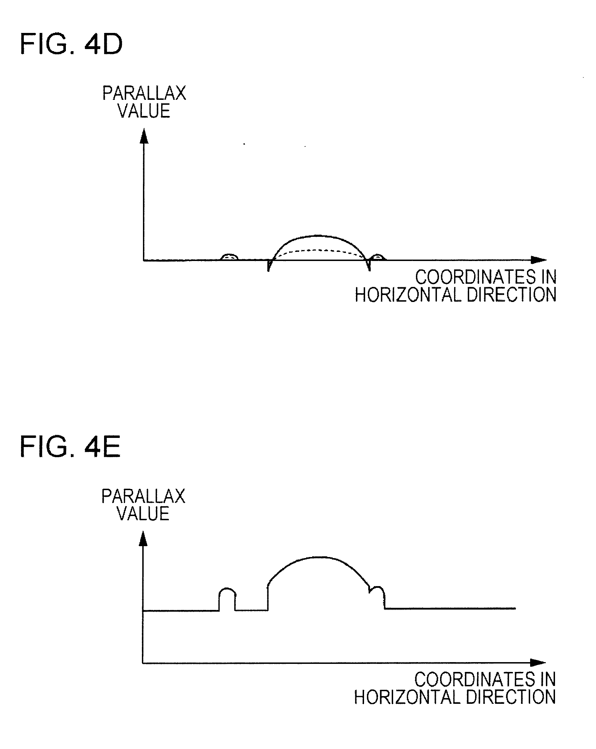

In addition, Figs. 4A to 4E are diagrams illustrating an example of an intermediate result and an example of a final result obtained by performing parallax distribution conversion processing on the parallax map of Fig. 2B by the parallax distribution conversion unit 30 illustrated in Fig. 3. Here, Fig. 4A is an example of a parallax map obtained on a row-by-row basis after a parallax structure of the parallax map of Fig. 2B has been extracted. Fig. 4B is an example of a parallax map obtained on the row-by-row basis after the differences between parallax values have been reduced on the parallax map of Fig. 4A. Fig. 4C is an example of a parallax map obtained on the row-by-row basis after a continuous parallax component has been extracted using the parallax map of Fig. 2B and the parallax map of Fig. 4A. Fig. 4D is an example of a parallax map obtained on the row-by-row basis after the differences between parallax values have been enhanced on the parallax map of Fig. 4C. Fig. 4E is an example of a parallax map obtained on the row-by-row basis after the parallax map of Fig. 4B and the parallax map of Fig. 4D have been combined together. In the examples of the parallax maps on the row-by-row basis in Figs. 4B and 4D, parallax maps obtained on the row-by-row basis before processing are drawn with a dotted line.

In the parallax structure extraction unit 101, processing for extracting a parallax structure from the parallax values of each row is performed. A parallax structure to be extracted is, as illustrated in Fig. 2B, referred to a rough spatial structure of parallax values and to a low-frequency component (low component) and a boundary component (edge component) of parallax values in the parallax map. In this example, parallax values are obtained by using an epsilon filter, which is a nonlinear smoothing filter configured to retain edges. When the parallax values of coordinates x are denoted by $d(x)$, a one-dimensional Gaussian filter is denoted by $a[i]$, window size is denoted by W, and a constant is denoted by $\varepsilon$, parallax values $dx(x)$ obtained after parallax structure extraction are expressed as the following equation. As a result, in the parallax map of Fig. 2B, similarly to as in the parallax map of Fig. 4A, an edge portion (the parallax component of the region other than the parallax continuous region, in which the differences between parallax values of adjacent pixels are greater than the predetermined value) and a flat non-edge portion other than the edge portion (the parallax component of the parallax continuous region, in which the differences between parallax values of adjacent pixels are smaller than or equal to the predetermined value) appear.

[Math 1]

$$dx(x) = \sum_{i=-w}^{w} a[i] \cdot f(d(x), d(x+i))$$

$$f(d1, d2) = \begin{cases} d2 & : \ |d1 - d2| \leq \varepsilon \\ d1 & : \ |d1 - d2| > \varepsilon \end{cases}$$

In this example, a one-dimensional epsilon filter is used to perform processing; however, a two-dimensional epsilon filter, a rank order filter, a typical example of which is a median filter, a bilateral filter, a trilateral filter, or the like may also be used. A filter to be used is not limited to this as long as a non-linear smoothing filter configured to retain edges is used.

In this manner, the parallax structure extraction unit 101 in the continuity detection unit 31 detects a rough spatial structure of parallax values by extracting the low component and the edge component of parallax values in the parallax map of a stereo image.

The parallax reduction unit 102 performs reduction processing on the parallax map of each row extracted by the parallax structure extraction unit 101. In this example, as reduction processing, processing for multiplying the differences between parallax values of adjacent pixels by $\alpha$ using a second constant $\alpha$ is employed for parallax values belonging to the region other than the parallax continuous region. Here, the constant $\alpha$ is $0 \leq \alpha < 1$. Note that a first constant will be described later. That is, this reduction processing is processing for multiplying the parallax component other than the continuous parallax component by the constant $\alpha$. This reduction processing may be called processing for multiplying the above-described parallax structure by $\alpha$ and is processing for reducing the differences (parallax range) between parallax values between subjects which are regions capable of being easily enhanced, utilizing human visual performance described in Non Patent Literature 1 (performance with which the difference between objects in the depth direction is viewed in an enhanced manner).

Furthermore, this reduction processing is processing for multiplying the parallax component other than the continuous parallax component by the constant $\alpha$ and for adding a third constant c1. When parallax values obtained before reduction processing are denoted by dx, parallax values dx' obtained after reduction processing are expressed as the following equation. By this equation, as illustrated in Fig. 4B, the differences (parallax range) between parallax values of adjacent pixels are also multiplied by $\alpha$.

$$dx' = \alpha \cdot dx + c1$$

Note that, for dx', description is given on the assumption that the more frontward a subject is positioned, the greater the parallax values of the subject and the more backward the subject is positioned, the smaller the parallax values of the subject. On the other hand, processing may also be performed by employing parallax values such that the more frontward a subject is positioned, the smaller the parallax values of the subject, and the more backward the subject is positioned, the greater the parallax values of the subject. In addition, a constant c1 may be a positive value for increasing parallax values as in the case of Fig. 4B to prevent parallax values from being too small. Alternatively, a negative value may also be employed to lower parallax values by a constant value.

In this example, a multiple of the parallax range of the region other than the parallax continuous region is obtained; however, an arbitrary parallax value may be treated as a center and nonlinear reduction processing may also be performed in which weighting based on the distance from the parallax value is performed. Processing to be performed is not limited to this as long as it is processing in which the parallax range is reduced.

The continuous-parallax-component extraction unit 103 extracts a continuous parallax component of the parallax map on the row-by-row basis as illustrated in Fig. 4C, by obtaining the differences between parallax values extracted on the row-by-row basis by the parallax structure extraction unit 101 illustrated in Fig. 4A from the parallax map illustrated in Fig. 2B on the row-by-row basis. In this manner, the continuous-parallax-component extraction unit 103 in the continuity detection unit 31 detects a parallax continuous region by extracting a continuous parallax component of parallax values in a parallax map.

The parallax enhancing unit 104 performs enhancement processing on a parallax map of the continuous parallax component of each row extracted by the continuous-parallax-component extraction unit 103. In this example, as enhancement processing, processing is employed in which, for parallax values belonging to the parallax continuous region, the differences (parallax range) between parallax values of adjacent pixels are multiplied by $\beta$ using a first constant $\beta$ ($\beta > \alpha$). Here, the constant $\beta$ is a constant greater than 1. That is, this enhancement processing is enlargement processing in which a continuous parallax component is multiplied by the constant $\beta$, which is greater than 1.

In this example, the constant $\alpha$ is $0 \leq \alpha < 1$ since reduction processing is performed, and the constant $\beta$ is a constant greater than 1 since enhancement processing is performed; however, any constant is acceptable for the constant $\beta$ as long as an effect of relatively enhancing of the parallax gradient is obtained in comparison with the case where parallax range reduction processing is performed on a parallax structure component. That is, any constant is acceptable for the constant $\beta$ as long as it has a greater value than the constant $\alpha$. Conversely speaking, the constant $\alpha$ may have any value as long as the constant $\alpha$ is smaller than the constant $\beta$, and the constant $\alpha$ is not limited to $0 \leq \alpha < 1$ although reduction processing is performed. The above-described enhancement processing is processing for enhancing the differences between parallax values of the parallax continuous region, whose difference in depth is more difficult to perceive, by utilizing human visual performance described in Non Patent Literature 1 (performance with which the difference between objects in depth is viewed in an enhanced manner, conversely speaking, performance with which it is difficult to perceive differences in depth within one object).

When parallax values obtained before enhancement processing are denoted by dx, parallax values dx' obtained after enhancement processing are expressed as the following equation. By this equation, the parallax map of Fig. 4C becomes something like the parallax map of Fig. 4D, and the differences between parallax values of adjacent pixels are multiplied by $\beta$.

$$dx' = \beta \cdot dx$$

Here, as described above, a pixel region having identical parallax values (that is, for example, an object that has identical parallax values, has two dimensions, and faces the very front) also belongs to the above-described parallax continuous region. Also in this case, the above-described enhancement processing is processing for enhancing, for the parallax values belonging to the parallax continuous region, the differences between parallax values of adjacent pixels. Also in this example, likewise, multiplication may be performed using a constant greater than the constant $\alpha$. In such a pixel region, since the differences between parallax values are initially 0, the differences between parallax values are maintained at 0 as a result of multiplication using such a constant.

In this example, a multiple of the parallax range of the parallax continuous region is obtained; however, processing to be performed may also be nonlinear processing in which weighting based on the distance from an origin is performed and is not limited to this as long as processing for enhancing a parallax range is performed.

In addition, in the above-described example, one-dimensional processing performed on each row is described as an example; however, processing may also be performed in a batch using a two-dimensional filter instead of performing processing on a row-by-row basis.

As illustrated, here, with a structure capable of detecting a rough spatial structural component and a continuous parallax component of parallax, it is assumed that the conversion processing unit 32 performs, as the above-described parallax value conversion processing, (i) reduction processing on the parallax range of the region other than the parallax continuous region and (ii) enhancement processing on the parallax range of the parallax continuous region. Processing to be performed is not limited to this, and processing performed on the parallax range of the region other than the parallax continuous region may also differ from processing performed on the parallax range of the parallax continuous region.

In the parallax combining unit 105, combining processing is performed on the parallax map of each row converted by the parallax reduction unit 102 and the parallax map of each row converted by the parallax enhancing unit 104. In this example, combining processing is performed on the parallax maps of each row by performing addition processing in which the parallax values of the parallax component other than the continuous parallax component of the parallax map of the row reduced by the parallax reduction unit 102 and the parallax values of the continuous parallax component of the parallax map of the row enhanced by the parallax enhancing unit 104 are added together.

In this manner, the parallax combining unit 105 in the conversion processing unit 32 completes parallax distribution conversion by adding the parallax map obtained after performing of reduction processing on the parallax values belonging to the region other than the parallax continuous region (that is, the parallax component other than the continuous parallax component) and the parallax map obtained after performing of enhancement processing on the parallax values belonging to the parallax continuous region (that is, the continuous parallax component).

That is, the conversion processing unit 32 performs enlargement processing in which the parallax gradient is enhanced by enlarging the continuous parallax component and reduction processing in which the parallax component other than the continuous parallax component is reduced, performs addition processing in which the continuous parallax component on which enlargement processing has been performed and the parallax component other than the continuous parallax component on which reduction processing has been performed are added together, and outputs a result of the addition as a parallax map obtained after conversion processing.

By performing only reduction processing, the conversion processing unit 32 performs reduction processing in which the parallax component other than the continuous parallax component is reduced and consequently the parallax gradient of the continuous parallax component is relatively enhanced. Also in this case, addition processing is performed in which the continuous parallax component and the parallax component other than the continuous parallax component on which reduction processing has been performed are added together and a result of the addition is output as a parallax map obtained after conversion processing. Likewise, after only enlargement processing is performed in which the parallax gradient is enhanced by enlarging the continuous parallax component, the conversion processing unit 32 may perform addition processing in which the continuous parallax component on which enlargement processing has been performed and the parallax component other than the continuous parallax component are added together, and output a result of the addition as a parallax map obtained after conversion processing.

Referring back to Fig. 1, processing performed after parallax distribution conversion will be described. The image generation unit 40 reconstructs a different-viewpoint image from the reference-viewpoint image and the parallax map obtained after conversion performed by the parallax distribution conversion unit 30. More specifically, the image generation unit 40 reads, for each pixel of a standard specified image, the parallax value at the coordinates from the parallax map and copies the pixel value into an image whose coordinates have been shifted by an amount of the parallax value, in the different-viewpoint image to be reconstructed. This processing is performed on all pixels of the reference-viewpoint image. In the case where a plurality of pixel values are assigned to the same pixel, the pixel value of the pixel that is greatest in the projection direction is used in accordance with a z-buffer method.

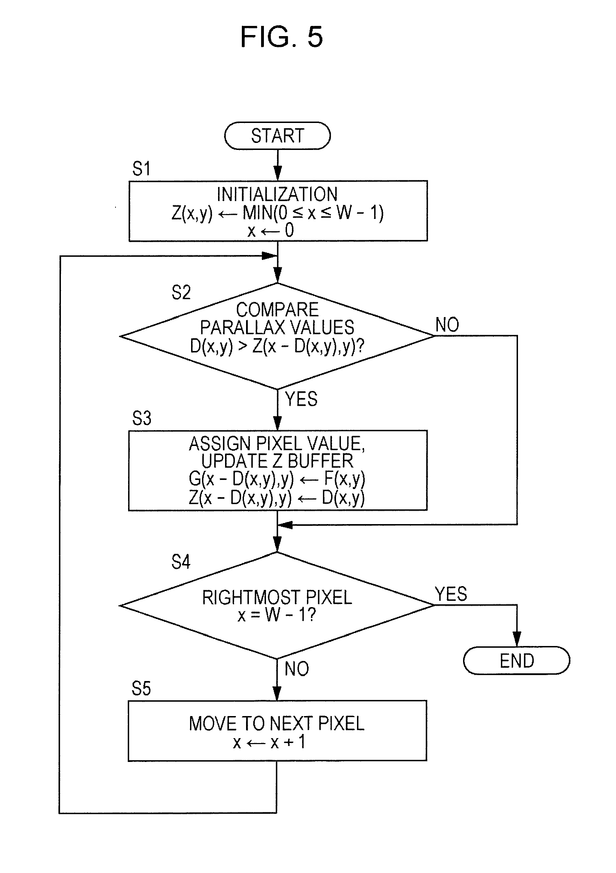

With reference to Fig. 5, an example of reconstruction processing of a different-viewpoint image in the image generation unit 40 will be described. Although (x, y) represents coordinates within an image, processing is performed on a row-by-row basis in Fig. 5 and y is constant. F denotes the reference-viewpoint image, G denotes the different-viewpoint image for display, and D denotes the parallax map. Z denotes a matrix used to retain the parallax value of each pixel of the different-viewpoint image for display in a processing process and is called a z buffer. W denotes the number of pixels of the image in a lateral direction.

First, in step S1, the z buffer is initialized to an initial value MIN. Suppose that parallax values have positive values in the projection direction and negative values in the depth direction, and MIN has a value smaller than the minimum value of parallax converted by the parallax distribution conversion unit 30. Furthermore, in order to sequentially perform processing from the leftmost pixel in subsequent steps, 0 is input to x. In step S2, the parallax value of the parallax map at certain coordinates is compared with the value of the z buffer of a pixel that has coordinates shifted from the certain coordinates by the parallax value and it is determined whether or not the parallax value is greater than the value of the z buffer. In the case where the parallax value is greater than the value of the z buffer, the procedure proceeds to step S3 and a pixel value of the reference-viewpoint image is assigned to the different-viewpoint image for display. In addition, the value of the z buffer is updated.

Next, in step S4, in the case where the current coordinates indicate the rightmost pixel, the procedure ends. Otherwise, the procedure proceeds to step S5 and the target pixel moves to the next pixel to the right. Thereafter, the procedure returns to step S2. In step S2, in the case where the parallax value is smaller than or equal to the value of the z buffer, the procedure skips step S3 and proceeds to step S4. This procedure is performed on all rows. Since reconstruction is performed by shifting the coordinates only laterally by the parallax value, the different-viewpoint image for display may be generated that does not differ from the reference-viewpoint image except for parallax.

Furthermore, in the stereo-image display apparatus according to this embodiment, the image generation unit 40 performs interpolation processing on pixels to which no pixel values have been assigned and assign pixel values to the pixels. That is, the image generation unit 40 includes an image interpolation unit and is always ready to determine a pixel value. For a pixel to which a pixel value has not yet been assigned, this interpolation processing is performed using the average of the pixel value of a pixel to which a pixel value has already been assigned and that is immediately to the left of the pixel and that of a pixel to which a pixel value has already been assigned and that is immediately to the right the pixel. Here, as interpolation processing, the average of the pixel values of nearby pixels; however, it is not limited to a method using the average and weighting based on the distance to the pixel may also be performed or another method may also be employed in which, for example, another filtering processing is employed.

The display unit 50 includes a display device and a display control unit. The display control unit performs control such that a stereo image including, as display elements, a reference-viewpoint image and a different-viewpoint image generated by the image generation unit 40 is output to the display device, the different-viewpoint image referring to a different-viewpoint image obtained after reconstruction in the case where a structure with which a different-viewpoint image is initially input is used. That is, the display unit 50 inputs the reference-viewpoint image and the generated different-viewpoint image and performs binocular stereoscopic display. In the input unit 10, in the case where the reference-viewpoint image is a left-eye image and the different-viewpoint image is a right-eye image, the reference-viewpoint image is displayed as the left-eye image and the different-viewpoint image obtained after reconstruction is displayed as the right-eye image. In the input unit 10, in the case where the reference-viewpoint image is a right-eye image and the different-viewpoint image is a left-eye image, the reference-viewpoint image is displayed as the right-eye image and the different-viewpoint image obtained after reconstruction is displayed as the left-eye image.

In addition, in the case where images input to the input unit 10 are multiple-viewpoint images, in accordance with a correspondence relationship between viewpoint positions of data for two selected viewpoints, it is determined whether the reference-viewpoint image and the different-viewpoint image are displayed as left-eye and right-eye images or as right-eye and left-eye images. Note that, in the case where image data input to the input unit 10 includes image data and depth data or parallax data, a determination is made in accordance with a setting as to whether the image data is used in a left-eye or right eye image. The display unit 50 includes the display control unit and the display device as described above; however, also in the description of the other embodiments, processing performed by the display control unit and the display device is simply referred to as processing performed by the display unit 50 in the following.

As described above, according to this embodiment, when parallax distribution conversion processing is performed, a parallax structure is extracted from a parallax map, extraction processing is performed using the extracted parallax map to extract a continuous parallax component of parallax, and parallax distribution conversion processing is performed in accordance with a parallax map obtained after conversion by combining a result of reduction processing performed on the parallax range of a structural portion of the extracted parallax map and a result of enhancement processing performed on the parallax range of the continuous parallax component. As a result, the differences (parallax range) between parallax values of subjects in an input stereo image are reduced, thereby enabling the parallax values of the stereo image, that is, the depth of the stereo image, to be adjusted such that the gradients of the parallax values in the subjects are enhanced.

That is, according to this embodiment, regarding stereo vision, the parallax distribution of a stereo image may be adaptively converted in accordance with human visual performance. Thus, in this embodiment, also in the case where a viewer performs depth adjustment from the operation unit, appropriate parallax adjustment is performed in a certain range other than the range in which the sense of depth is no longer retained when parallax is made to be smaller or the sense of depth is increased too much and images are doubled when parallax is made to be larger. Thus, it is possible to provide a preferable sense of depth to viewers.

Second Embodiment

A specific example of the structure of the parallax distribution conversion unit 30 in a stereo-image display apparatus according to a second embodiment of the present invention is different from the example of the structure of the parallax distribution conversion unit 30 described with reference to Fig. 3 in the stereo-image display apparatus illustrated in Fig. 1. The stereo-image display apparatus according to the second embodiment performs parallax distribution conversion on the basis of a parallax histogram value. Note that, also in this embodiment similarly to as in the first embodiment, the continuity detection unit 31 in the parallax distribution conversion unit 30 performs processing, on a stereo image, similar to processing for detecting a parallax continuous region on the basis of parallax discontinuity, the conversion processing unit 32 in the parallax distribution conversion unit 30 performs processing similar to processing in which different parallax value conversion processing is performed on the parallax values belonging to the parallax continuous region and on the parallax values belonging to a region other than the parallax continuous region.

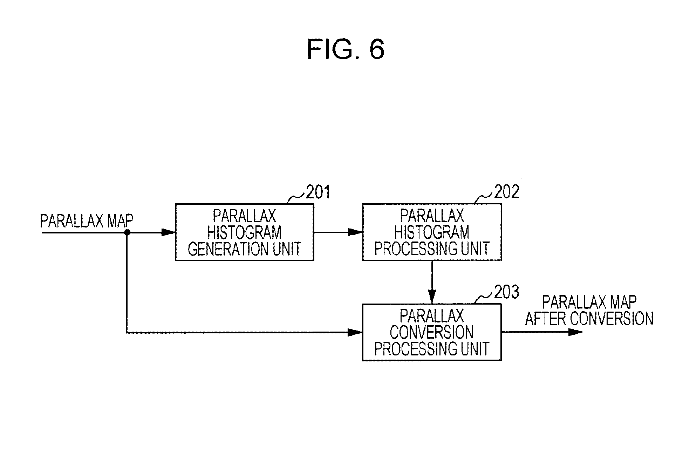

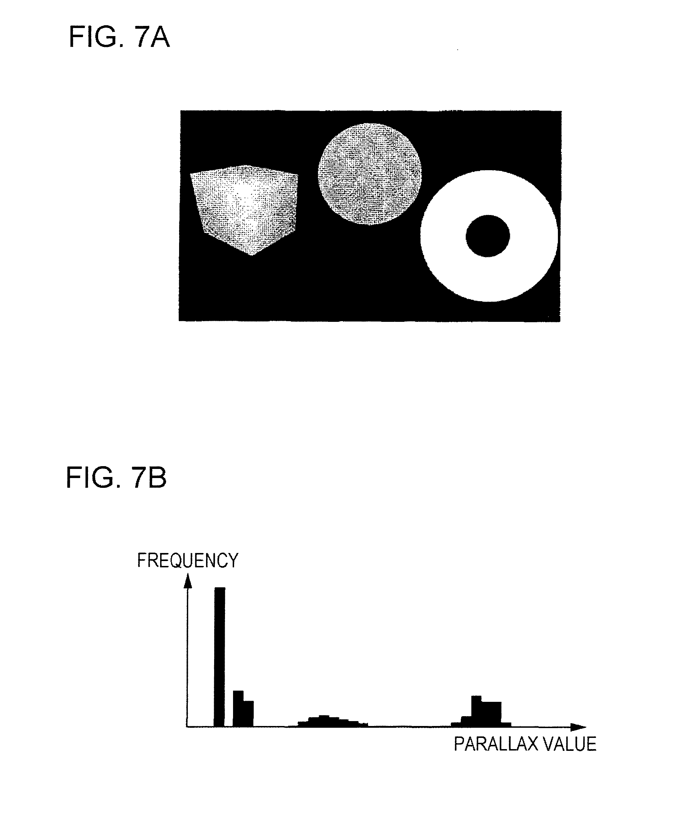

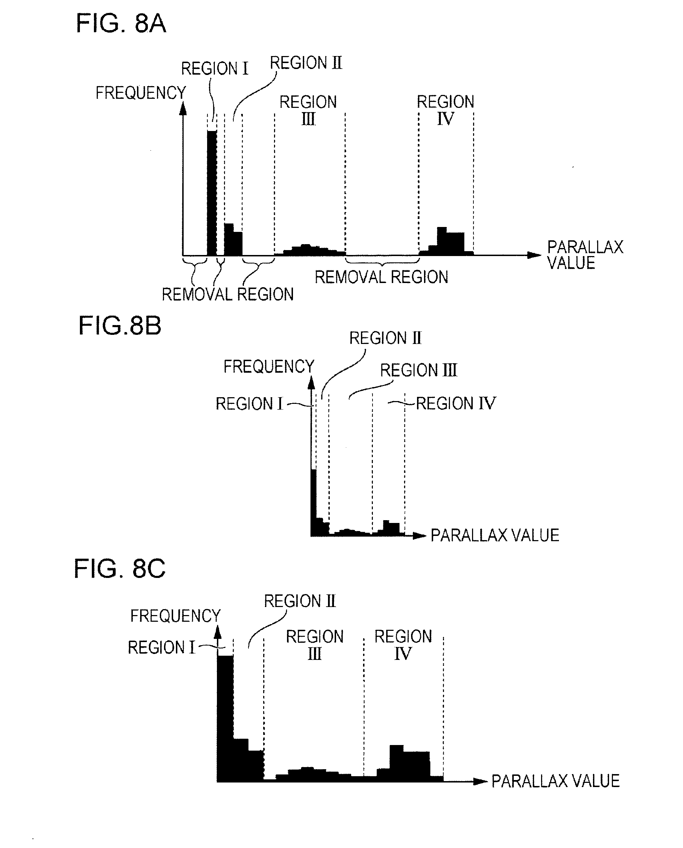

In the following, with reference to Figs. 6, 7A, 7B, and 8A to 8C, description the same as that of the first embodiment is omitted and only a specific example of another structure of the parallax distribution conversion unit 30 will be described. Fig. 6 is a block diagram illustrating an example of the structure of the parallax distribution conversion unit 30 according to this embodiment. Fig. 7A is a diagram illustrating another example of a parallax map of a stereo image input to the stereo-image display apparatus of Fig. 1. Fig. 7B is a diagram illustrating a histogram of parallax values (in the following, a parallax histogram) of the parallax map of Fig. 7A. In addition, Fig. 8A is a diagram illustrating an example of a result obtained by performing region division on the parallax histogram of Fig. 7B on the basis of values of the parallax histogram. Fig. 8B is a diagram illustrating an example of a result obtained by compressing the parallax histogram in accordance with a result of the region division in Fig. 8A. Fig. 8C is a diagram illustrating an example of a result obtained by enhancing the parallax histogram in accordance with a result obtained by compressing the parallax histogram in Fig. 8B.

As illustrated in Fig. 6, the parallax distribution conversion unit 30 according to this embodiment includes a parallax histogram generation unit 201, a parallax histogram processing unit 202, and a parallax conversion processing unit (a parallax value conversion processing unit) 203. The parallax histogram generation unit 201 generates a parallax histogram from a parallax map. The parallax histogram processing unit 202 is used to convert a parallax distribution using the parallax histogram generated by the parallax histogram generation unit 201. The parallax conversion processing unit 203 converts the parallax map in accordance with a parallax histogram processing result calculated by the parallax histogram processing unit 202 and outputs a parallax map obtained after conversion. The parallax histogram generation unit 201 and part of the parallax histogram processing unit 202 correspond to an example of the continuity detection unit 31, and the remaining of the parallax histogram processing unit 202 and the parallax conversion processing unit 203 correspond to an example of the conversion processing unit 32.

The parallax map calculated by the parallax calculation unit 20 and illustrated in Fig. 7A, similarly to Fig. 2A, is a parallax map to which, for each pixel, the parallax value calculated at the pixel is assigned as a certain luminance value. The parallax distribution of the stereo image is expressed such that the larger the parallax becomes in the projection direction, the greater the luminance value that is assigned is and the smaller the parallax becomes in the depth direction, the smaller the luminance value that is assigned is.

The parallax histogram generation unit 201 generates a parallax histogram from an input parallax map. For example, similarly to the parallax histogram illustrated in Fig. 7B, the parallax map of Fig. 7A may be changed into a graph in which the vertical axis represents frequency (the number of pixel values having the same parallax value in the parallax map) and the horizontal axis represents parallax values (the larger the parallax becomes in the projection direction, the greater the parallax value and the smaller the parallax becomes in the depth direction, the smaller the parallax value). Note that, in Fig. 7B, for convenience sake, the vertical axis is drawn at the smallest parallax value (the axis of frequency); however, similarly to the examples of Figs. 2A and 2B, a parallax value may be a negative value.

The parallax histogram processing unit 202 performs parallax histogram processing using the parallax histogram generated by the parallax histogram generation unit 201. In this embodiment, parallax distribution conversion is performed in the end in accordance with the parallax histogram of the parallax map expressed by the graph of Fig. 7B. In addition, in this embodiment, a parallax histogram is generated by simply using, as parallax values, the values of bins of a parallax histogram; however, the number of bins may be set to an arbitrary value and a parallax histogram may be generated by performing normalization to the value.

An example of parallax histogram processing according to this embodiment will be described with reference to Figs. 8A to 8C. In the parallax histogram processing unit 202, first, region division processing is performed on a parallax histogram on the basis of a predetermined threshold Hist_TH. Note that suppose $Hist\_TH \geq 0$. Region division processing is performed on values $H(d)$ of the parallax histogram by treating regions where $H(d) > Hist\_TH$ as valid regions (regions I to IV in Fig. 8A) and regions where $H(d) \leq Hist$ as invalid regions.

Here, suppose Hist_TH = 0, and region division is performed on the parallax histogram of Fig. 7B. As a result, a parallax histogram of Fig. 8A is obtained. Here, valid regions are, as illustrated as regions I to IV in Fig. 8A, regions of parallax values having frequencies greater than the above-described threshold on the parallax histogram. Invalid regions are, as illustrated as region other than regions I to IV in Fig. 8A, regions of parallax values having frequencies smaller than or equal to the above-described threshold on the parallax histogram.

The parallax histogram processing unit 202 according to this embodiment detects such a valid region as a parallax continuous region and such an invalid region as a parallax discontinuous region. That is, in this region division processing, the parallax values belonging to a valid region are detected as parallax values belonging to a parallax continuous region and the parallax values belonging to an invalid region are detected as parallax values belonging to a parallax discontinuous region.

In this manner, the continuity detection unit 31 of this embodiment performs processing (region division processing) in which the parallax histogram generation unit 201 generates a parallax histogram from a parallax map, which is a parallax component of a stereo image, and the parallax histogram processing unit 202 detects, from the histogram, regions (valid regions) of parallax values having frequencies greater than a predetermined threshold on the histogram as parallax continuous regions and detects regions (invalid regions) of parallax values having frequencies smaller than or equal to the predetermined threshold on the histogram as parallax discontinuous regions.

As a result, the continuity detection unit 31 may detect parallax continuous regions. Specifically, pixel regions where there are parallax values of parallax continuous regions on the parallax histogram are regarded as parallax continuous regions where the differences between parallax values of adjacent pixels are smaller than or equal to the predetermined value and pixel regions where there are parallax values of parallax discontinuous regions on the parallax histogram are regarded as regions other than the parallax continuous regions where the differences between parallax values of adjacent pixels are greater than the predetermined value. The differences between parallax values of adjacent pixels are continuous values in a certain object (subject) and the differences between parallax values of adjacent pixels are discrete values (discontinuous values) between objects having different parallax values (or parallax ranges), thereby enabling such approximation.

Next, the parallax histogram processing unit 202 compresses the entire parallax range by performing shifting processing, in a direction in which parallax values are smaller, on each of the regions that have been determined to be invalid regions (that is, regions that have been determined to be removable regions) as a result of region division as illustrated in the parallax histogram of Fig. 8B. That is, the parallax histogram processing unit 202 removes the parallax discontinuous regions (the invalid regions), as reduction processing, on the parallax histogram and executes shifting processing such that the gaps between adjacent parallax continuous regions (valid regions) are eliminated. By performing such shifting processing, the parallax histogram of Fig. 8A becomes the parallax histogram of Fig. 8B, and parallax values on the parallax histogram may be smaller values after shifting is performed. Thus, when the parallax conversion processing unit 203, which will be described below, performs conversion to obtain a parallax map, for the parallax values belonging to the parallax discontinuous region, the differences between parallax values of adjacent pixels may be reduced on the parallax map in the end.

Instead, as reduction processing, the parallax histogram processing unit 202 may reduce, for the parallax values belonging to the parallax discontinuous regions, the differences between parallax values of adjacent pixels in the end by reducing, on the parallax histogram, the parallax discontinuous regions (the invalid regions) and by executing shifting processing such that the gaps between adjacent valid regions are reduced. In addition, the above-described shifting processing is not limited to processing in which shifting is performed such that all regions that have been determined to be removable regions are removed, and may be processing in which shifting is performed such that such regions are partially left. That is, even when only w% ($0 < w \leq 100$) of a region that has been determined to be a removable region is removed, after conversion into a parallax map has been performed, shifting processing may reduce (compress) the parallax range of a parallax discontinuous region, which is part of a spatial region of the parallax map.

In this manner, the parallax histogram processing unit 202 of the conversion processing unit 32 reduces or removes, as reduction processing, parallax discontinuous regions on a parallax histogram, executes shifting processing for performing shifting such that the gaps between adjacent parallax continuous regions are eliminated or reduced. In the end, for parallax values belonging to the parallax discontinuous regions, the differences between parallax values of adjacent pixels may be reduced.

Next, in order to enhance the compressed parallax histogram, as illustrated in Fig. 8C, as enhancement processing, the parallax histogram processing unit 202 performs, on the parallax histogram, enlargement processing (that is, processing for multiplying the width of the valid regions on the parallax histogram by a constant) in which the parallax values belonging to the valid regions are multiplied by a constant $\gamma$ greater than 1. In this example, as histogram enlargement processing, processing is performed in which the parallax values on the parallax histogram are multiplied by a fourth constant $\gamma$, which is greater than 1, and a fifth constant c2 is added. When parallax values on the parallax histogram before enhancement processing are denoted by dx, parallax values dx' on the parallax histogram after enhancement processing are expressed as the following equation. $dx' = \gamma \cdot dx + c2$

In accordance with this equation, valid regions I to IV are multiplied by $\gamma$ as illustrated in Fig. 8C. Fig. 8C illustrates a state of multiplication of parallax values by a constant on the parallax histogram, and this happens on the parallax histogram by multiplying each parallax value of regions I to IV by $\gamma$. Since conversion is performed such that the parallax values on the parallax histogram are multiplied by a constant, even in the case where the resulting values are returned to a parallax map, the parallax range of parallax continuous regions, which are part of a spatial region of the parallax map, may be multiplied by a constant and enhanced. Thus, in this embodiment, it may be said that parallax distribution conversion is executed by changing statistics of the parallax map.

As described above, in the case where $\gamma > 1$, enhancement processing is performed and the parallax gradient that is continuous in a subject is enhanced. Note that, here, in the case where reduction processing is desired to be performed, simply set $\gamma < 1$. In the case where a parallax width exceeds the tolerance limits of human visual performance even after the above-described shifting processing, reduction processing may further be performed. Note that the constant c2 is a value for enlarging parallax values of a parallax continuous region by a predetermined amount of depth and a positive value is employed; however, the parallax values of the parallax continuous region may be reduced by employing a negative value by an amount of the negative value.

In this manner, the parallax histogram processing unit 202 of the conversion processing unit 32 performs, on a parallax histogram, histogram enlargement processing in which the parallax gradient is enhanced by, as enhancement processing, enlarging parallax values on a parallax histogram obtained after shifting processing. In particular, by performing processing in which parallax values belonging to a valid region are multiplied by a constant, which is a constant greater than 1, for parallax values belonging to a parallax continuous region obtained after conversion into a parallax map, the differences between parallax values of adjacent pixels may be enhanced.

In addition, each of the parallax values over regions I to IV is multiplied uniformly by a constant in this example; however, when an arbitrary parallax value is set at the center and nonlinear reduction processing may be performed in which weighting based on the distance from the parallax value is performed, and the values of the constants $\gamma$ and $c2$ may differ from region to region. Processing to be performed is not limited to this as long as processing for enhancing a parallax range is performed. In this manner, the fourth constant and/or the fifth constant may be made to be different on a parallax-continuous-region-by-parallax-continuous-region basis in the histogram and processing may be performed. As a matter of course, when $\gamma < 1$ as described above, a parallax range may be reduced.

In addition, with a structure for performing such region division processing, it is assumed that, as the above-described parallax value conversion processing, the conversion processing unit 32 performs (i) reduction processing on parallax discontinuous regions and (ii) enhancement processing on parallax continuous regions; however, the conversion processing unit 32 may perform only the above-described (ii) enhancement processing. Alternatively, only the above-described (i) reduction processing may be executed, or only the following processing may be performed in which processing for valid regions may differ from that for invalid regions, in other words, processing for parallax continuous regions may differ from that for parallax discontinuous regions.

In this manner, the parallax histogram processing unit 202 of the conversion processing unit 32 performs parallax histogram conversion by performing parallax value conversion processing of this embodiment (that is, reduction processing and/or enhancement processing of this embodiment). Furthermore, the parallax histogram processing unit 202 outputs a converted parallax histogram and a parallax histogram obtained before conversion to the parallax conversion processing unit 203.

The parallax conversion processing unit 203 generates a parallax map conversion table for converting a parallax map from parallax histograms obtained before and after conversion, and converts a parallax map in accordance with the generated parallax map conversion table. Note that such a conversion table may also be generated from a result obtained by not performing one of reduction processing and enhancement processing on the parallax histograms as described above. Also in the case where reduction processing is not executed, the above-described region division processing is performed before enhancement processing.

In this manner, the parallax conversion processing unit 203 of the conversion processing unit 32 generates a parallax map conversion table for converting a parallax map from parallax histograms obtained before and after performing of shifting processing and histogram enlargement processing, converts a parallax map in accordance with the parallax map conversion table, and outputs the converted parallax map.

As described above, according to this embodiment, in the case where parallax distribution conversion processing is performed, a parallax histogram, which has been generated from a parallax map, is divided into valid regions and invalid regions on the basis of an arbitrary threshold, compression and enhancement processing are performed on the parallax histogram in accordance with a result of the region division, and parallax value conversion processing is performed in accordance with the converted parallax histogram. Thus, the parallax values of a stereo image, that is, the depth of the stereo image may be adjusted such that the differences between parallax values are reduced at a boundary between subjects in the input stereo image and the gradients of parallax values in the subjects are enhanced.

That is, according to this embodiment, regarding stereo vision, a parallax distribution of a stereo image may be adaptively converted in accordance with human visual performance. Thus, in this embodiment, also in the case where a viewer performs depth adjustment from the operation unit, appropriate parallax adjustment is performed in a certain range other than the range in which the sense of depth is no longer retained when a parallax is made to be smaller or the sense of depth is increased too much and images are doubled when parallax is made to be larger. Thus, it is possible to provide a preferable sense of depth to viewers.

About First and Second Embodiments

In the above, in stereo-image display apparatuses according to the first and second embodiments of the present invention, adjustment of a degree (for example, each parameter in each of the above-described equations) of change (adjustment) of a parallax distribution of a stereo image corresponds to adjustment of the amount of parallax in the stereo image. Such a degree of change may be operated by a viewer from the operation unit or may be determined in accordance with default settings. In addition, such a degree of change may be changed on the basis of indicators other than the parallax of the stereo image including the genre of the stereo image, image feature values such as the average luminance of viewpoint images constituting the stereo image, and the like. In any adjustment, in each embodiment, parallax distribution conversion may be executed in which a parallax range is adaptively enhanced/compressed in accordance with a difference as to whether parallax values in the stereo image belong to the parallax continuous region or the region other than the parallax continuous region (regarding stereo vision, in accordance with human visual performance as described in NPL 1). Thus, in the present invention, a preferable sense of depth may be provided.

In addition, as the first and second embodiments of the present invention, stereo-image display apparatuses have been described. The present invention may include, as an embodiment, a stereo-image processing apparatus, which is obtained by removing the display device from such a stereo-image display apparatus. That is, the display device that displays stereo images may be mounted in the main body of the stereo-image processing apparatus according to the present invention or may be connected externally. Such a stereo-image processing apparatus may be installed not only in television apparatuses and monitor apparatuses but also in various types of recorders and other video output devices such as various types of recording media playback apparatuses.

In addition, among the units of the stereo-image display apparatus illustrated in Figs. 1 and 3 or those of the stereo-image display apparatus illustrated in Figs. 1 and 6, a portion that corresponds to a stereo-image processing apparatus according to the present invention (that is, elements except for the display device that the display unit 50 includes) may be realized by hardware and software that is executable on the hardware, the hardware including, for example, a microprocessor (or DSP: Digital Signal Processor), a memory, a bus, an interface, a peripheral device. Part of or the entirety of the above-described hardware may be mounted as an integrated-circuit/IC (Integrated Circuit) chip set such as an LSI (Large Scale Integration). In such a case, the above-described software is preferably stored in the above-described memory. In addition, all the elements of the present invention may also be constituted by hardware. In such a case, likewise, part of or the entirety of the hardware may be mounted as an integrated-circuit/IC chip set.

Note that, in the first and second embodiments, it is described that the elements used to realize functions are different portions; however, the elements do not have to be portions that may be clearly separated from each other and recognized in reality. As long as a stereo-image processing apparatus that realizes functions of the embodiments includes the elements as functions, a mounted state does not matter. For example, each of the elements used to realize the functions may be constituted using, for example, a corresponding one of different portions in reality or all the elements may be mounted on a single integrated-circuit/IC (Integrated Circuit) chip set.

In addition, stereo-image processing apparatuses according to the embodiments may also be constituted simply by a CPU (Central Processing Unit), a RAM (Random Access Memory) serving as a working area, a ROM (Read Only Memory) serving as a storage area for control programs, a storage device such as an EEPROM (Electrically Erasable Programmable ROM), and the like. In such a case, the above-described control programs include a stereo image processing program, which will be described later, used to execute processing according to the present invention. This stereo image processing program may be installed as application software for displaying stereo images in a PC and may cause the PC also to function as a stereo-image processing apparatus. In addition, this stereo image processing program may also be stored in an external server such as a Web server in a state in which the stereo image processing program is executable from client PCs.

As described above, stereo-image processing apparatuses according to the present invention have been mainly described. The present invention may include, as an embodiment, a stereo-image processing method as illustrated in the flow of control performed in a stereo-image display apparatus including this stereo-image processing apparatus. This stereo-image processing method is a method for converting a parallax distribution of a stereo image, and includes a step of detecting, for a stereo image, a parallax continuous region on the basis of parallax discontinuity and a step of performing processing for enhancing a parallax gradient of the parallax continuous region. The other application examples are as described earlier in description on the stereo-image display apparatuses.

In addition, the present invention may include, as an embodiment, a stereo image processing program used to cause a computer to execute the stereo-image processing method. That is, this stereo image processing program is a program for causing a computer to execute parallax distribution conversion processing in which a parallax distribution of a stereo image is converted. This parallax distribution conversion processing includes a step of detecting, for a stereo image, a parallax continuous region on the basis of parallax discontinuity and a step of performing processing for enhancing a parallax gradient of the parallax continuous region. The other application examples are as described earlier in description of the stereo-image display apparatuses.

In addition, an embodiment as a program recording medium, a computer readable recording medium on which the stereo image processing program is recorded, may also be easily understood. As this computer, not only general-purpose PCs but also various forms of computers such as a microcomputer and a programmable general-purpose integrated circuit/chip set as described above may be applied. In addition, this program may be distributed not only by portable recording mediums but also via a network such as the Internet or via air waves. Reception via a network refers to reception of a program recorded in a storage device such as an external server.

Reference Signs List

10 ... input unit, 20 ... parallax calculation unit, 30 ... parallax distribution conversion unit, 31 ... continuity detection unit, 32 ... conversion processing unit, 40 ... image generation unit, 50 ... display unit, 101 ... parallax structure extraction unit, 102 ... parallax reduction unit, 103 ... continuous-parallax-component extraction unit, 104 ... parallax enhancing unit, 105 ... parallax combining unit, 201 ... parallax histogram generation unit, 202 ... parallax histogram processing unit, 203 ... parallax conversion processing unit.

**Claims**

1. A stereo-image processing apparatus that performs conversion on a parallax distribution of a stereo image, comprising:

   a continuity detection unit that detects, for the stereo image, a parallax continuous region on the basis of parallax discontinuity; and
   a conversion processing unit that performs processing for enhancing a parallax gradient of the parallax continuous region.

2. The stereo-image processing apparatus according to Claim 1, wherein the continuity detection unit treats a parallax component of the stereo image as a parallax map and detects the parallax continuous region by performing processing in which the parallax component is separated into a continuous parallax component and a parallax component other than the continuous parallax component.

3. The stereo-image processing apparatus according to Claim 2, wherein the conversion processing unit performs enlargement processing in which the parallax gradient is enhanced by enlarging the continuous parallax component and reduction processing in which the parallax component other than the continuous parallax component is reduced, performs addition processing in which the continuous parallax component on which the enlargement processing has been performed and the parallax component other than the continuous parallax component on which the reduction processing has been performed are added together, and outputs a result of the addition as a parallax map obtained after conversion processing.

4. The stereo-image processing apparatus according to Claim 2, wherein the conversion processing unit performs enlargement processing in which the parallax gradient is enhanced by enlarging the continuous parallax component, performs addition processing in which the continuous parallax component on which the enlargement processing has been performed and the parallax component other than the continuous parallax component are added together, and outputs a result of the addition as a parallax map obtained after conversion processing.

5. The stereo-image processing apparatus according to Claim 2, wherein the conversion processing unit performs reduction processing in which the parallax gradient of the continuous parallax component is relatively enhanced by reducing the parallax component other than the continuous parallax component, performs addition processing in which the continuous parallax component and the parallax component other than the continuous parallax component on which the reduction processing has been performed are added together, and outputs a result of the addition as a parallax map obtained after conversion processing.

6. The stereo-image processing apparatus according to Claim 3 or 4, wherein the enlargement processing is processing for multiplying the continuous parallax component by a first constant greater than 1.

7. The stereo-image processing apparatus according to Claim 3 or 5, wherein the reduction processing is processing for multiplying the parallax component other than the continuous parallax component by a second constant greater than or equal to 0 and smaller than 1 and adding a third constant.

8. The stereo-image processing apparatus according to Claim 1, wherein the continuity detection unit detects the parallax continuous region by performing processing in which a parallax component of the stereo image is treated as a parallax map, a histogram of parallax values is generated from the parallax map, regions of parallax values having frequencies greater than a predetermined threshold on the histogram are detected as parallax continuous regions from the histogram, and a region of parallax values having frequencies smaller than or equal to the predetermined threshold on the histogram is detected as a parallax discontinuous region.

9. The stereo-image processing apparatus according to Claim 8, wherein the conversion processing unit performs shifting processing for performing shifting such that the parallax discontinuous region on the histogram is reduced or removed and a gap between the parallax continuous regions, which are adjacent to each other, is reduced or eliminated, and furthermore histogram enlargement processing in which the parallax gradient is enhanced by enlarging parallax values on a histogram obtained after shifting processing.

10. The stereo-image processing apparatus according to Claim 8, wherein the conversion processing unit performs histogram enlargement processing in which the parallax gradient is enhanced by enlarging parallax values on the histogram.

11. The stereo-image processing apparatus according to Claim 8, wherein the conversion processing unit performs shifting processing for performing shifting such that the parallax discontinuous region on the histogram is reduced or removed and a gap between the parallax continuous regions, which are adjacent to each other, is reduced or eliminated.

12. The stereo-image processing apparatus according to Claim 9 or 10, wherein the histogram enlargement processing is processing for multiplying parallax values on the histogram by a fourth constant greater than 1 and adding a fifth constant.

13. The stereo-image processing apparatus according to Claim 12, wherein the histogram enlargement processing is processing performed by making the fourth constant and the fifth constant be different on a parallax-continuous-region-by-parallax-continuous-region basis in the histogram.

14. The stereo-image processing apparatus according to any one of Claims 9 to 13, wherein the conversion processing unit generates a parallax map conversion table for converting the parallax map from histograms obtained before and after performing of the shifting processing and the histogram enlargement processing, converts the parallax map in accordance with the parallax map conversion table, and performs output.

15. A stereo-image processing method for converting a parallax distribution of a stereo image, comprising:

    a step of detecting, for the stereo image, a parallax continuous region on the basis of parallax discontinuity; and
    a step of performing processing for enhancing a parallax gradient of the parallax continuous region.

16. A program causing a computer to execute parallax distribution conversion processing for converting a parallax distribution of a stereo image, the parallax distribution conversion processing comprising:

    a step of detecting, for the stereo image, a parallax continuous region on the basis of parallax discontinuity; and
    a step of performing processing for enhancing a parallax gradient of the parallax continuous region.

# FIG. 1

EP 2 755 390 A1

FIG. 2A

FIG. 2B

PARALLAX
VALUE

COORDINATES IN
HORIZONTAL DIRECTION

# FIG. 3

PARALLAX MAP →

101 PARALLAX STRUCTURE EXTRACTION UNIT

102 PARALLAX REDUCTION UNIT

103 CONTINUOUS-PARALLAX-COMPONENT EXTRACTION UNIT

104 PARALLAX ENHANCING UNIT

105 PARALLAX COMBINING UNIT

→ PARALLAX MAP AFTER CONVERSION

FIG. 4A

PARALLAX
VALUE

COORDINATES IN
HORIZONTAL DIRECTION

FIG. 4B

PARALLAX
VALUE

COORDINATES IN
HORIZONTAL DIRECTION

FIG. 4C

PARALLAX
VALUE

COORDINATES IN
HORIZONTAL DIRECTION

EP 2 755 390 A1

## FIG. 4D

PARALLAX
VALUE

COORDINATES IN
HORIZONTAL DIRECTION

## FIG. 4E

PARALLAX
VALUE

COORDINATES IN
HORIZONTAL DIRECTION

22

# FIG. 5

```
                        ( START )
                            │
                            ▼
S1 ┌────────────────────────────────────────┐
   │           INITIALIZATION                │
   │   Z(x,y) ← MIN(0 ≤ x ≤ W – 1)           │
   │              x ← 0                       │
   └────────────────────────────────────────┘
                            │
      ┌─────────────────────┤
      │                     ▼
      │  S2            ╱╲
      │            ╱      ╲
      │         ╱  COMPARE   ╲
      │       ╱ PARALLAX VALUES ╲    NO
      │      ╲ D(x,y) > Z(x – D(x,y),y)? ╱──────────┐
      │         ╲              ╱                     │
      │            ╲        ╱                        │
      │               ╲  ╱                           │
      │                │ YES                         │
      │                ▼                             │
      │  S3 ┌────────────────────────────────┐       │
      │     │      ASSIGN PIXEL VALUE,        │       │
      │     │      UPDATE Z BUFFER            │       │
      │     │  G(x – D(x,y),y) ← F(x,y)       │       │
      │     │  Z(x – D(x,y),y) ← D(x,y)       │       │
      │     └────────────────────────────────┘       │
      │                │                             │
      │                │◄────────────────────────────┘
      │                ▼
      │  S4          ╱╲
      │           ╱      ╲
      │        ╱            ╲        YES
      │       ╲ RIGHTMOST PIXEL ╱──────────┐
      │        ╲   x = W – 1?  ╱           │
      │           ╲        ╱               ▼
      │              ╲  ╱              ( END )
      │               │ NO
      │               ▼
      │  S5 ┌────────────────────────────────┐
      │     │       MOVE TO NEXT PIXEL        │
      │     │          x ← x + 1              │
      │     └────────────────────────────────┘
      │               │
      └───────────────┘
```

# FIG. 6

FIG. 7A

FIG. 7B

FREQUENCY

PARALLAX VALUE

FIG. 8A

FIG.8B

FIG. 8C

## INTERNATIONAL SEARCH REPORT

| | International application No. |
|---|---|
| | PCT/JP2012/071437 |

A. CLASSIFICATION OF SUBJECT MATTER
*H04N13/04*(2006.01)i, *G09G5/00*(2006.01)i, *G09G5/36*(2006.01)i, *G09G5/38*(2006.01)i

According to International Patent Classification (IPC) or to both national classification and IPC

B. FIELDS SEARCHED

Minimum documentation searched (classification system followed by classification symbols)
H04N13/04, G09G5/00, G09G5/36, G09G5/38

Documentation searched other than minimum documentation to the extent that such documents are included in the fields searched
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2011-166498 A (Hitachi, Ltd.), 25 August 2011 (25.08.2011), entire text; all drawings (Family: none) | 1-16 |
| Y | WO 2011/052389 A1 (Fuji Film Kabushiki Kaisha), 05 May 2011 (05.05.2011), paragraphs [0061] to [0064]; fig. 4 & CN 102598051 A | 1-16 |

☐ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 November, 2012 (09.11.12) | Date of mailing of the international search report<br>20 November, 2012 (20.11.12) |
|---|---|
| Name and mailing address of the ISA/<br>Japanese Patent Office | Authorized officer |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2011055022 A

- JP 3157384 B

### Non-patent literature cited in the description

- **MITSUHIRO YOSHIDA ; HIROAKI SHIGEMASU.** Spatial and Temporal Range of Binocular Local Contrast Effect. *IEICE Technical Report, HIP2010-60,* November 2010, 1-6